# EUROPÄISCHE PATENTSCHRIFT

(11) **EP 1 425 523 B1**
(45) Veröffentlichungstag und Bekanntmachung des Hinweises auf die Patenterteilung: **19.04.2006**
(21) Anmeldenummer: 02772226.3
(22) Anmeldetag: 29.08.2002
(51) Int. Cl.: F16H 61/32

(54) **GETRIEBE MIT ELEKTROMECHANISCHEM GETRIEBESTELLER**
GEARBOX COMPRISING AN ELECTROMECHANICAL ACTUATOR
BOITE DE VITESSES A ACTIONNEUR ELECTROMECANIQUE

(30) Priorität: 05.09.2001 DE 10143325
(43) Veröffentlichungstag der Anmeldung: 09.06.2004
(73) Patentinhaber: ZF FRIEDRICHSHAFEN Aktiengesellschaft, 88038 Friedrichshafen (DE)
(72) Erfinder: SOMSCHOR, Bernd, 88069 Tettnang (DE); MIEHLE, Frank, 88090 Immenstaad (DE); SOMMER, Norbert, 88255 Baienfurt (DE); NEUENFELD, Jürgen, 88045 Friedrichshafen (DE); BUCHHOLD, Oliver, 88693 Deggenhausertal (DE)
(86) Internationale Anmeldenummer: PCT/EP2002/009626
(87) Internationale Veröffentlichungsnummer: WO 2003/023258

(56) Entgegenhaltungen:
- EP-A- 0 373 273
- WO-A-01/50041
- DE-A- 19 823 050
- DE-A- 19 941 474
- US-A- 5 150 629
- "ELECTRIC SHIFTING DEVICE FOR AUTOMOTIVE TRANSMISSIONS" RESEARCH DISCLOSURE, KENNETH MASON PUBLICATIONS, HAMPSHIRE, GB, Nr. 337, 1. Mai 1992 (1992-05-01), Seiten 408-409, XP000310115 ISSN: 0374-4353

## Beschreibung

Die Erfindung betrifft einen elektromechanischen Getriebesteller und ein mit einem derartigen Steller ausgestattetes Getriebe.

Fahrzeuge mit automatisierten Schaltgetrieben sind seid längerer Zeit am Markt vorhanden. Bevorzugter Einsatzbereich sind hier kommerziell genutzte Fahrzeuge wie Transporter oder LKW. In der jüngeren Vergangenheit werden auch vermehrt PKW in sportlichen Anwendungen oder Kleinwagen mit solchen Getriebe ausgerüstet. Ziel ist es, den Fahrer vom Gangwechsel im Fahrzeug zu entlasten und insgesamt einen komfortableren und sichereren Betrieb zu ermöglichen . Fahrzeuge mit solchen Getrieben verfügen üblicherweise über zwei Pedale als Fahrpedal und Bremse. Das Kupplungspedal kann entfallen. Im Fahrzeug steht ein Fahrschalter zur Wahl der Betriebsart zur Verfügung. Hier kann zwischen Automatikmodus, Handschaltmodus und Rückwärtsgang gewählt werden. Ist der Automatikmodus gewählt, erfolgt die Übersetzungsanpassung automatisch. Insbesondere im NKW-Bereich existieren verschiedene Lösungen für die Automatisierung von Schaltgetrieben. So gibt es verschiedene Varianten, wie beispielsweise pneumatische, hydraulische oder rein elektrische Systeme. Welche Variante gewählt wird hängt im wesentlichen von der Fahrzeugklasse und der damit verfügbaren Energiearten in diesen Fahrzeugen zusammen. Weiterhin ist der Leistungsbedarf der verwendeten Aktuatoren eine wichtige Kenngröße. Als Aktuatoren werden systemabhängig Pneumatik- oder Hydraulikzylinder oder Elektromotoren verwendet, die über Getriebe die Wähl- und Schalteinrichtungen antreiben. Aktuatoren, die von Elektromotoren angetrieben werden, stellen besonders kostengünstige Konstruktionen dar.

Bei Getrieben von Fahrzeugen ist es seit langem ein Bedürfnis, ein bestehendes mechanisches Getriebe, das manuell geschaltet wird, weiterzuverwenden mit einem automatisierungsfähigen, elektromechanischen Getriebesteller. Elektromechanische Getriebesteller zur Schaltung eines Fahrzeuggetriebes sind vielfältig bekannt. Dabei wird ein Getriebe verwendet, das entweder mit dem Getriebesteller zusammen entwickelt wird, oder das Adaptionselemente aufweist, die an dem Getriebe zum Zusammenwirken mit dem Getriebesteller vorgesehen werden müssen.

Ein solcher Getriebesteller ist beispielgebend aus der EP 0 377 848 B1 bekannt. Dort wird ein elektromechanischer Getriebesteller beschrieben, der zwei senkrecht zueinander angeordnete Bewegungsachsen aufweist. Ein einzelner Schaltfinger wird von zwei Elektromotoren auf den Bewegungsachsen geführt. Dabei greift der Schaltfinger vom ersten Elektromotor bewegt auf der einer Wählbewegung entsprechenden ersten Bewegungsachse in jeweils eine Öffnung in den verschiedenen, parallel nebeneinander angeordneten Schaltstangen ein. Zum Schalten eines mit jeweils einer Schaltstange verbundenen Schaltpakets wird durch Bewegung des Schaltfingers auf der zweiten Bewegungsachse die Schaltstange in ihrer Längsachse vom zweiten Elektromotor verschoben. Der Bewegungsmechanismus des Schaltfingers in zwei senkrecht zueinander angeordneten Bewegungsachsen entspricht zwar der Wähl- und Schaltvorgabe sowohl aus dem manuellen Handschaltbild heraus, als auch aus der Auswahl und der Verschiebung der jeweiligen Schaltstange, er benötigt aber auf der anderen Seite auch einen erheblichen Bauraum. Auch die Anzahl der für den Getriebesteller erforderlichen Bauelemente ist hoch.

Ein Getriebesteller nach dem Nächsteliegenden Stand der Technik ist bekannt aus der WO 01/50041.

Der Erfindung liegt die Aufgabe zugrunde, bei einem Getriebesteller die Anzahl der Bauteile zu verringern und den benötigten Bauraum zu verringern.

Die Aufgabe wird gelöst durch einen Getriebesteller mit den Merkmalen des Anspruchs 1. Ausgestaltungen sind Gegenstand von Unteransprüchen.

Ein elektromechanischer Getriebesteller gemäß der Erfindung weist einen ersten Elektromotor zur Ausübung einer Wählbewegung einer Schalteinrichtung in einem Getriebegehäuse eines Getriebes eines Kraftfahrzeuges auf, und er weist einen zweiten Elektromotor zur Ausübung einer Schaltbewegung der Schalteinrichtung auf. In einer Steuerung werden Sensorsignale empfangen, verarbeitet und als Steuerungssignale an die Elektromotoren ausgegeben. Die Steuerung kann ganz oder teilweise im Getriebesteller integriert sein, oder auch als ein externes Steuergerät ausgebildet sein. Die Drehachse des ersten Elektromotors und die Drehachse des zweiten Elektromotors liegen parallel zueinander, was den erforderlichen Bauraumbedarf deutlich reduziert. Durch die parallele Zuordnung zueinander wird die Verwendung von möglichst vielen Gleichteilen wie beispielsweise Elektromotoren, Kugelumlaufspindeln oder Kugelmuttern ermöglicht. In einer vorteilhaften Ausgestaltung umfasst der Getriebesteller ein Gehäuse, das am Getriebegehäuse montiert ist. Es wird dabei genau so montiert, wie auch ein Handschaltmodul auf dem Getriebegehäuse angeordnet wird. Dadurch ist eine Weiterverwendung eines bisher handgeschalteten Getriebes als ein dann mit einem Getriebesteller, beispielsweise auch automatisiert, geschalteten Getriebes möglich, ohne das Getriebe selbst ändern zu müssen, ja gegebenenfalls gar ohne das Getriebe aus dem Fahrzeug ausbauen zu müssen. Die Flanschfläche zwischen dem Getriebesteller und dem Getriebegehäuse bleibt unverändert. In einer anderen vorteilhaften Ausgestaltung umfasst der Getriebesteller ein Gehäuse, das in dem Getriebegehäuse integriert ist. Hierdurch entfällt die Verschraubung des Getriebestellers außen am Getriebegehäuse und die Bearbeitung von Dichtflächen des Getriebestellers nach außen. Das Gehäuse wird vorzugsweise aus Stahlblech oder aus Aluminiumdruckguss gefertigt. In einer besonders vorteilhaften Ausführungsform sind der erste Elektromotor und der zweite Elektromotor nebeneinander auf einer gemeinsamen Seite des Gehäuses des Getriebestellers angeordnet. In einer weiteren Ausgestaltung sind der erste Elektromotor und der zweite Elektromotor auf zwei einander gegenüberliegenden Seiten des Gehäuses des Getriebestellers angeordnet. Die Elektromotoren sind an ihren Stirnseiten mit dem Gehäuse verschraubt und an der Flanschfläche zum Gehäuse abgedichtet. Jeder Elektromotor besitzt einen externen Steckkontakt, über den Signale ausgetauscht und die Spannungsversorgung sichergestellt werden. Bei der Verwendung von abgeflachten Motoren kann durch entsprechendes Verdrehen des Motors in der Einbaulage ein von der Einbaulage her besonders niedriger Getriebesteller erzeugt werden, wie er in bestimmten Einbaulagen notwendig ist. Als Elektromotoren können beispielsweise bürstenlose Servomotoren, Gleichstrommotoren, Wechselstrommotoren oder Schrittmotoren verwendet werden. Um die Drehbewegung der Elektromotoren in eine Linearbewegung umzusetzen, werden Kugelumlaufspindeln verwendet. In einer Ausführungsform ist für die Wählbewegung und die Schaltbewegung je eine Kugelumlaufspindel mit einer geringen Steigung vorgesehen, die jeweils direkt von einem der Elektromotoren angetrieben wird. In einer anderen Ausführungsform ist für die Wählbewegung und die Schaltbewegung je eine Kugelumlaufspindel mit einer großen Steigung vorgesehen, die jeweils über eine Übersetzung von einem der Elektromotoren angetrieben wird. Hier kommen Kegelrad-, Stirnrad, Kombinationen aus Kegelrad- und Stirnradgetrieben, Schneckengetriebe oder auch eine Hebelübersetzung zum Einsatz. Alternativ zur Kugelumlaufspindel und darauf bewegbarer Kugelmutter kann auch ein Gewinde, eine Spindel bzw. eine Gewindespindel und eine damit korrespondierende Schraubenmutter verwendet werden.
In einer Ausgestaltung der Erfindung ist auf der Kugelumlaufspindel für die Schaltbewegung eine Kugelmutter vorgesehen, die in einem Schaltzylinder zwischen zwei Federeinrichtungen, die in der Bewegungsrichtung der Kugelumlaufspindel wirken, angeordnet ist und deren Bewegung entlang der Kugelumlaufspindel den Schaltzylinder in der Bewegungsrichtung der Kugelumlaufspindel bewegt. Dreht sich die Kugelumlaufspindel für die Schaltbewegung um ihre Achse, so wird die auf ihr befindliche Kugelmutter in Axialrichtung bewegt und drückt dabei die Federeinrichtung zusammen. Die Federeinrichtung ist aus Bauraumgründen als ein Federpaket aus Tellerfedern ausgeführt. Wenn der Bauraum es zulässt, sind auch andere Federarten möglich, wie beispielsweise Schraubenfedern in Zug- oder Druckausführung, Blattfedern, Luftfedern, magnetische Federn oder Kunststofffedern. Diese Federpakete werden als Kraftspeicher genutzt und sollen eine eventuelle Überlastung der Getriebeschaltung oder der Antriebseinheit mit dem Elektromotor verhindern, sowie eine schnelle Durchschaltung der Schiebemuffe nach Erreichen des Synchronpunktes ermöglichen. Zur Abstützung des in die Kugelumlaufspindel eingeleiteten Drehmomentes wird eine Schraube oder ein Stift verwendet, die innerhalb des Schaltzylinders axial bewegbar ist, jedoch eine Relativverdrehung der Kugelmutter gegenüber dem Schaltzylinder verhindert. Die Kugelmutter, die Federpakete und die Drehmomentabstützung werden vom Schaltzylinder aufgenommen. Die Axialbewegung des Schaltzylinders wird in einer Ausgestaltung beispielsweise über einen Zylinderstift oder eine Kugel-Zylinder-Paarung, womit der Schaltzylinder mit einem Umlenkhebel und einem Schaltfinger verbunden ist, in eine senkrecht zu der Bewegung des Schaltzylilders entlang der Kugelumlaufspindel verlaufende Schaltbewegung der Schalteinrichtung, beispielsweise einer einzelnen Wähl- und Schaltwelle, übersetzt. Eine Verdrehung von Schaltwelle und Schaltfinger zueinander kann durch eine kraft- oder formschlüssige Verbindung, beispielsweise durch einen Spannstift, verhindert werden. Wird die Kugelumlaufspindel für die Wählbewegung über den zugehörigen Elektromotor in eine Drehbewegung versetzt, so verschiebt sich die Kugelmutter auf der Kugelumlaufspindel axial. Der Wählfinger ist beispielsweise form- oder kraftschlüssig mit der Kugelmutter verbunden und so gegen ein Verdrehen gesichert. Darüber hinaus können Wählfinger und Kugelmutter ein Bauteil bilden. Axial kann der Wählfinger über einen Sicherungsring gegen ein Verschieben relativ gegenüber der Kugelmutter gesichert sein. Die Drehmomentabstützung kann durch eine Axialführung des Wählfingers im Gehäuse des Getriebestellers erfolgen. In einer vorteilhaften Ausgestaltungsform ist die Leistungsdimensionierung des Elektromotors zur Ausübung der Wählbewegung kleiner vorgesehen als die Leistungsdimensionierung des Elektromotors zur Ausübung der Schaltbewegung. Die Antriebsleistung der Elektromotoren kann unterschiedlich ausgelegt werden, da im allgemeinen zum Wählen einer Gasse deutlich geringere Kräfte aufgebracht werden müssen, als beispielsweise für die Rückschaltung vom zweiten in den ersten Gang. Eine Ausführungsform weist zusätzliche Abstützungsvorrichtungen auf, die die Elektromotoren am Getriebegehäuse lagern. Diese reduzieren die auftretenden Schwingungsbeschleunigungen an den Enden der Elektromotoren. Die genaue Lage und Form des Abstützbleches sowie die Anbindung der Elektromotoren an das Abstützblech ergibt sich aus einer Untersuchung der Anregungsfrequenz und der Lage der Eigenfrequenz des Getriebestellers. Eine Begrenzung der Maximalbeschleunigung ermöglicht einen deutlich längeren und sichereren Betrieb des Gesamtsystems. In einer Ausgestaltung ist zwischen der Welle des Elektromotors und der Kugelumlaufspindel eine Kreuzkupplung vorgesehen. Durch die Kreuzkupplungen oder auch eine andere kraft- oder formschlüssige Kupplung, wie insbesondere ein Mehrkant- oder Polygonprofil oder eine Rutschkupplung, kann ein Achsversatz zwischen der Drehwelle des Elektromotors und der Kugelumlaufspindel ausgeglichen werden. Die in der Kugelumlaufspindel auftretenden Axialkräfte werden durch eine Lagerung der Kugelumlaufspindel im Gehäuse des Getriebestellers aufgefangen und nicht auf die Drehwelle des Elektromotors übertragen. In einer anderen Ausgestaltung ist die Kugelumlaufspindel die Drehwelle des Elektromotors. Eine Ausführungsform weist in dem Getriebesteller eine Entlüftungseinrichtung auf, die gleichzeitig die Entlüftung des Gehäuses des Getriebestellers und des Gehäuses des Getriebes gewährleistet. Die Anordnung wird so vorgenommen, dass die Entlüftungseinrichtung nicht Spritzöl oder anderen Beeinträchtigungen ausgesetzt ist. Zur Feststellung der aktuellen Position der Schaltfinger können integrierte oder externe Sensoren verwendet werden. In einer Ausführungsform sind auf der Oberfläche des Gehäuses des Getriebestellers Positionssensoren vorgesehen, die je mit einem Magneten auf jeder der Kugelumlaufspindeln berührungslos zusammenwirken. Die externen Sensoren besitzen ebenfalls außenliegende Steckkontakte, über die die Spannungsversorgung und der Signalaustausch vollzogen wird. Die Sensorsignale werden in der Steuerung weiterverarbeitet.

Beim Betrieb automatisierter Getriebe ist es wichtig, die Position der Schaltgabeln oder Schaltschwingen und das Einlegen der einzelnen Gangstufen zu jedem Zeitpunkt exakt zu erkennen. Durch Sensoren können die Positionen von Schaltschienen der Schalteinrichtung absolut gemessen und so ein Einlegen eines Ganges erkannt werden.
Wird eine Wegmessung über Relativsensoren vorgenommen, so ist ein Abgleich der Sensoren relativ zur Schalteinrichtung nach einer bestimmten Anzahl von Schaltvorgängen notwendig. Um dabei in der Schalteinrichtung Einflüsse einer Serienstreuung zu verhindern und Funktionssicherheit zu gewährleisten, sind Toleranzeinschränkungen gegenüber den bei einem nicht automatisierten Getriebe zugelassenen Toleranzen notwendig.

In einer vorteilhaften Ausführung weist die Schalteinrichtung Referenzschalter auf, die definierte Absolutpositionen der Wähl- und Schaltwelle als bewegbarem Element festlegen und nur bei Erreichen dieser definierten Absolutposition ein Signal ausgeben. Der Elektromotor weist einen Inkrementalgeber auf, der Inkremente für einen zurückgelegten Drehweg des Elektromotors in einer Drehrichtung an eine Steuerung weiterleitet, in der in einer H-Schaltung eine Strommessvorrichtung vorgesehen ist. Der Inkrementalgeber gibt keine Absolutposition aus, sondern nur Inkremente pro zurückgelegtem Weg und eine Drehrichtung des Elektromotors. Aus den Weginkrementen des Inkrementalgebers wird in der Steuerung ein absolutes Wegsignal berechnet. Diese Berechnung wird mit bekannten Wegpunkten kontinuierlich abgeglichen. Die Strommessvorrichtung misst den aufgenommenen Strom des Elektromotors. In der Steuerung wird aus dem gemessenen Stromverlauf eine berechnete Absolutposition des Elementes ermittelt. Diese berechnete Absolutposition wird bei Erreichen der Referenzschalter mit der definierten Absolutposition abgeglichen. Zum Abgleich der Absolutposition für den Elektromotor für die Wählbewegung ist ebenfalls ein Referenzschalter vorgesehen. Wird ein Signal von diesem Referenzschalter empfangen, so ist die definierte Absolutposition des von diesem Elektromotor bewegten Elements bekannt. Die aktuell berechnete Absolutposition wird dann mit dieser definierten Absolutposition verglichen und gegebenenfalls korrigiert. In einer vorteilhaften Ausführung ist der Referenzschalter für den Elektromotor für die Wählbewegung in einem Schaltbild des Schaltgetriebes im Bereich der Wählgasse zwischen der Schaltgasse des Rückwärtsgangs und der ersten benachbarten Schaltgasse für Vorwärtsgänge angeordnet. Wenn die berechnete Absolutposition verlorengeht, beispielsweise bei einem Reset während der Fahrt, so kann beim Überstreichen des so angeordneten Referenzschalters aus der aktuellen Drehrichtung des Elektromotors auf den sich ergebenden Fahrtrichtungsbereich des Getriebes geschlossen werden. In einer Ausführungsform liegen die Referenzschalter für den Elektromotor für die Schaltbewegung an mechanisch festgelegten Endpositionen des bewegten Elements, insbesondere der Schaltwelle oder Schaltschiene, die einem vollständig eingelegten Gang entsprechen, also der Position, in der die Schaltung abgeschlossen ist.
Ohne gravierende Toleranzeinschränkungen der Schalteinrichtung bei einem Getriebe, insbesondere bei einem automatisierten Getriebe, kann der Schaltablauf überwacht, das Einlegen der Gänge erkannt und das Erreichen der Endposition mit einem Sensor festgestellt werden.

Eine besonders vorteilhafte Ausführungsform zeigt ein Getriebe mit dem erfindungsgemäßen Getriebesteller, das ein nach einer Schaltlogik arbeitendes, automatisiertes Schaltgetriebe ist. Grundsätzlich kann der erfindungsgemäße Getriebesteller auch für Schaltgetriebe zur Anwendung kommen, bei denen die Schaltsignale vom Fahrzeugführer manuell erzeugt und dann an die Steuerung weitergegeben werden, also das Getriebe nur dann schaltet, wenn der Fahrer die Schaltung initiiert. Die Schalteinrichtung in dem durch den Getriebesteller geschalteten Getriebe umfasst vorzugsweise eine kombinierte Wähl- und Schaltwelle, auf die der Getriebesteller durch Drehung der kombinierten Wähl- und Schaltwelle als Wahlvorgang einwirkt und auf die der Getriebesteller durch axiales Verschieben der kombinierten Wähl- und Schaltwelle als Schaltvorgang einwirkt.
Die Schalteinrichtung ist dann als eine Einschienenschaltung ausgebildet, bei der die von den Elektromotoren betätigte Wähl- und Schaltwelle direkt auf die Schaltelemente zugreift. Die Wähl- und Schaltwelle ist in der Endposition der Gänge sowie in der Neutralposition über Rastelemente fixiert.
Bei der Schalteinrichtung des Schaltgetriebes kann auch eine Mehrschienenschaltung mit einem Wähl- und einem Schaltelement in Form einer zentralen Wähl- und Schaltwelle vorgesehen sein, die wenigstens über je einen Elektromotor für die Schaltbewegung und für die Wählbewegung verfügt. Diese zentrale Wähl- und Schaltwelle greift auf mehrere Schienen zu, die jeweils ein Schaltelement betätigen. Alle Schienen sind in der Endposition der Gänge sowie in der Neutralposition über Rastelemente fixiert.

Die Erfindung wird anhand einer Zeichnung näher beschrieben.
Es zeigen:
- Fig. 1: eine schematische Darstellung eines Getriebes im Fahrzeug;
- Fig. 2: die Anordnung eines Getriebestellers am Getriebe;
- Fig. 3: ein Getriebesteller geschlossen;
- Fig. 4: der Getriebesteller nach Fig. 3 teilgeöffnet;
- Fig. 5: der Getriebesteller in Draufsicht teilweise geschnitten;
- Fig. 6: der Getriebesteller in Seitenansicht teilweise geschnitten;
- Fig. 7: einen Getriebesteller mit vier Motoren;
- Fig. 8: eine H-Schaltung in der Steuerung;
- Fig. 9: ein Schaltbild und
- Fig. 10: einen Stromverlauf während einer Schaltung.

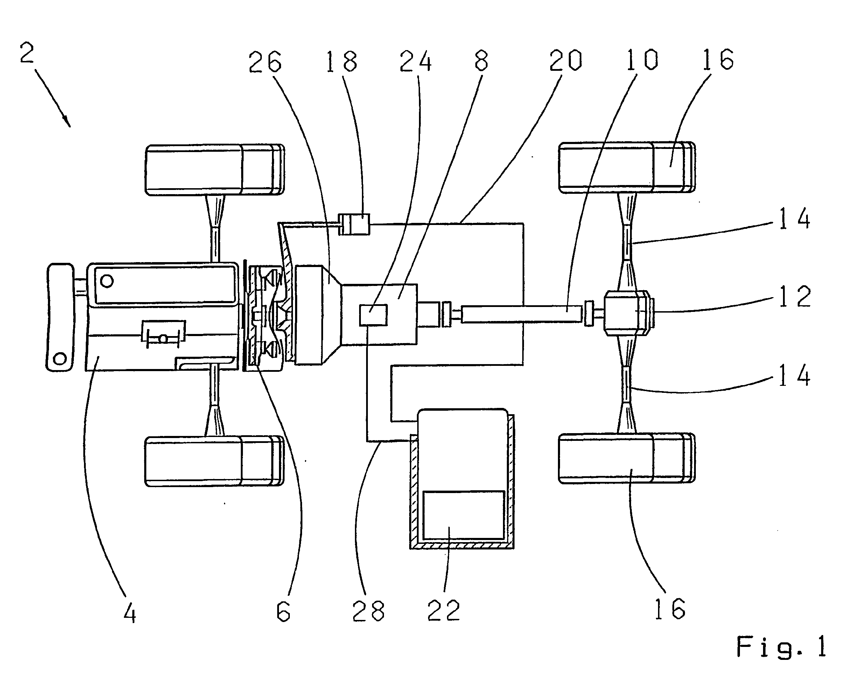

Die Fig. 1 zeigt eine schematische Darstellung eines Fahrzeuges 2 mit einem Antriebsmotor 4, der über eine Reibungskupplung 6 auf ein Getriebe 8 einwirkt. Das Getriebe 8 ist über eine Abtriebswelle 10 mit einem Differenzial 12 verbunden, das über je eine Halbachse 14 ein Fahrzeugrad 16 antreibt. Die Reibungskupplung 6 wird von einem Aktuator 18 betätigt, der über eine Signalleitung 20 mit einer Steuerung 22 verbunden ist. Das Getriebe 8 wird von einem Getriebesteller 24 betätigt, der auf dem Gehäuse 26 des Getriebes angeordnet ist und der über eine Leitung 28 mit der Steuerung 22 verbunden ist.

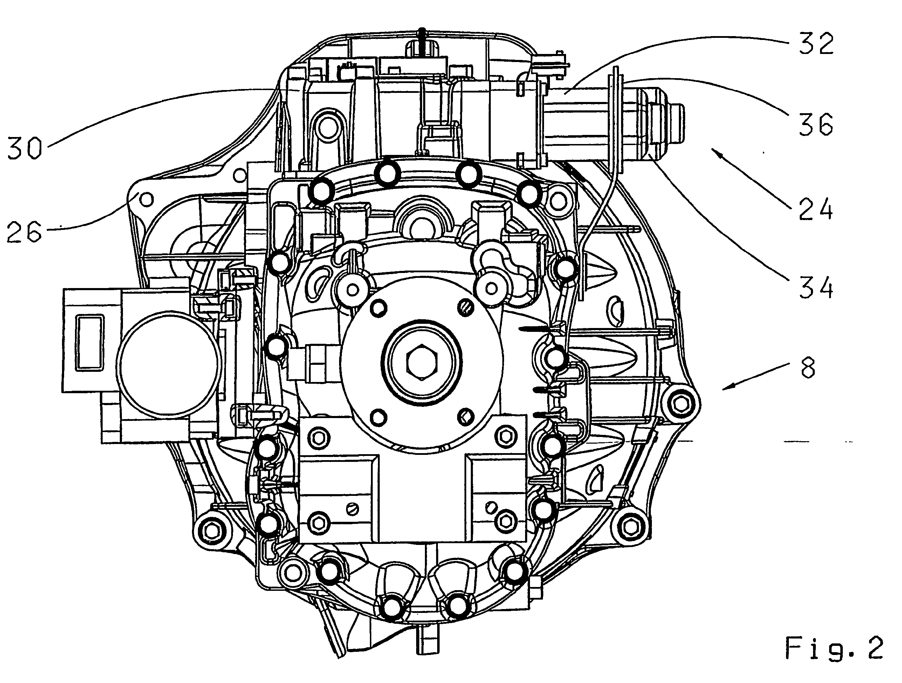

In der Fig. 2 ist auf dem Getriebegehäuse 26 des Getriebes 8 der Getriebesteller 24 in einem extern angeordneten Gehäuse 30 montiert. Ein erster Elektromotor 32 und ein in dieser Ansicht dahinterliegender zweiter Elektromotor 34 sind nebeneinander auf einer Seite des Gehäuses 30 angeordnet. Ein Abstützblech 36 umfasst die beiden Elektromotoren 32 und 34 und ist außen am Getriebegehäuse 26 befestigt.

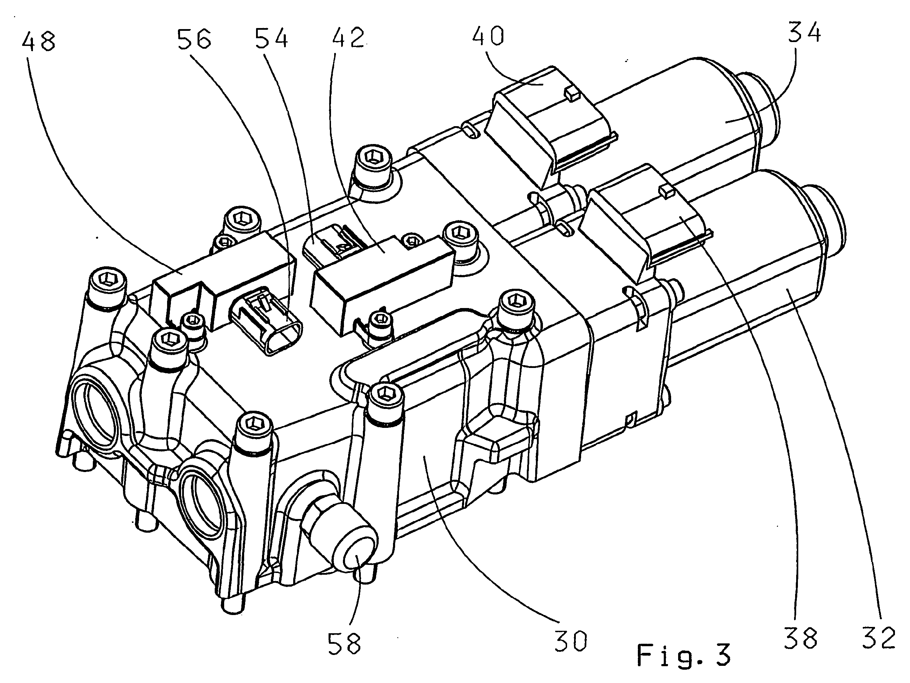

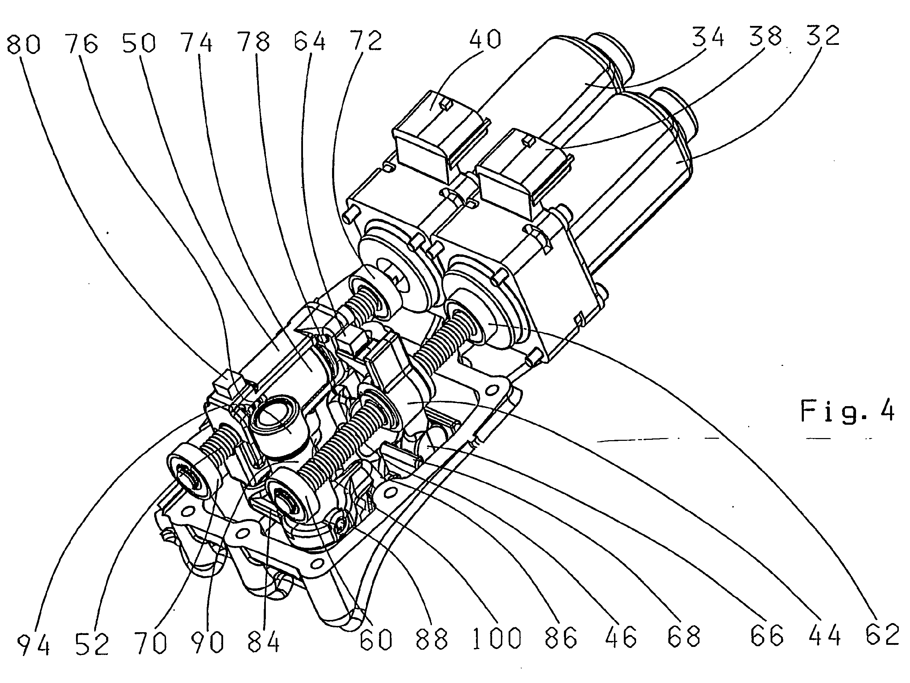

In der Fig. 3 ist der Getriebesteller 24 losgelöst von einem Getriebe dargestellt. An dem Gehäuse 30 ist auf einer Seite der Elektromotor 32 und der Elektromotor 34 nebeneinander angeordnet. Der für die Ausübung der Wählbewegung zuständige Elektromotor 32 weist eine kleinere Dimensionierung auf als der für die Ausübung der Schaltbewegung zuständige Elektromotor 34. Jeder Elektromotor 32, 34 weist eine Steckverbindung 38, 40 auf, die der Signalübertragung und der Leistungsübertragung dienen. Ein außenliegender Positionssensor 42 registriert die Verschiebung der Kugelmutter 44 auf der Kugelumlaufspindel 46, die für die Wählbewegung zuständig ist (siehe Fig. 4). Ein weiterer außenliegender Positionssensor 48 registriert die Verschiebung des Schaltzylinders 50 auf der Kugelumlaufspindel 52, die für die Schaltbewegung zuständig ist. Die Positionssensoren 42, 48 weisen Steckverbindungen 54, 56 auf, die der Signalübertragung dienen. Seitlich am Gehäuse 30 ist ein Entlüfter 58 angebracht, über den sowohl das Innere des Gehäuses 30 des Getriebestellers 24 als auch das Getriebegehäuse 26 entlüftet wird.

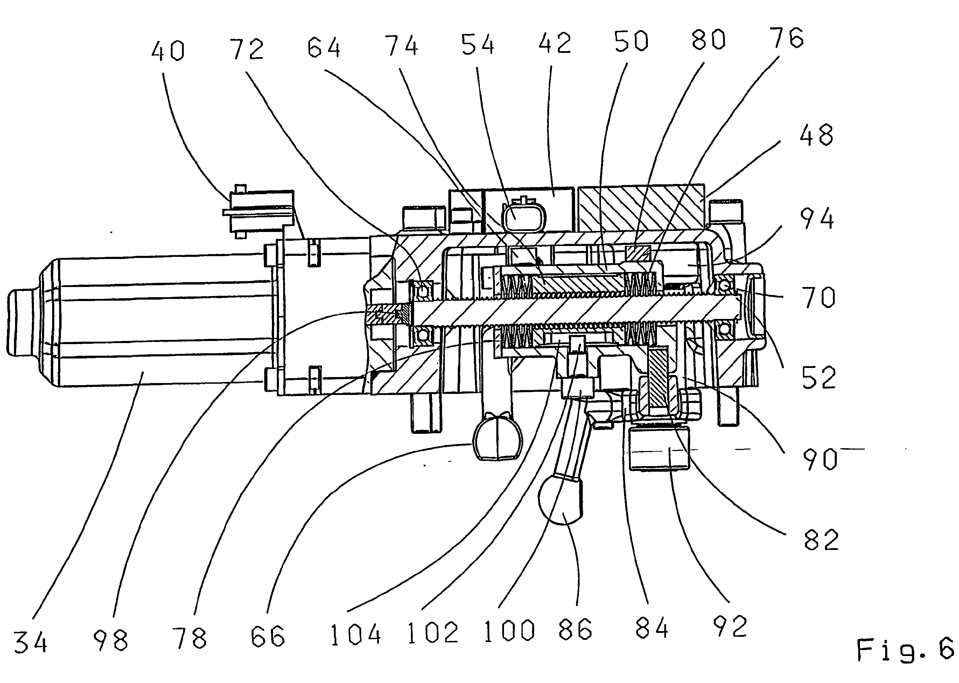

Die Fig. 4 zeigt den Getriebesteller 24 nach der Fig. 3 in einer teilgeöffneten Darstellung, die eine detaillierte Beschreibung der Funktionsmerkmale des Getriebestellers 24 ermöglicht. Der Elektromotor 32 treibt die Kugelumlaufspindel 46 an, die in zwei Lagern 60 und 62 gelagert ist. Auf der Kugelumlaufspindel 46 wird die Kugelmutter 44 bei Drehung des Elektromotors 32 axial verschoben, wobei die aktuelle Position der Kugelmutter 44 über einen auf einem Ausleger der Kugelmutter 44 montierten Magneten 64 auf den Positionssensor 42 übertragen wird. An der Kugelmutter 44 ist ein Schaltfinger 66 vorgesehen, der an seinem hier gezeigten unteren Ende kreisförmig ausgebildet ist. Mit diesem kreisförmigen Teil greift der Schaltfinger 66 in die Wähl- und Schaltwelle 68 des Getriebes 8 ein, die sich rechtwinklig zur Drehachse der Kugelumlaufspindel 46 erstreckt. Durch eine axiale Bewegung der Kugelmutter 44 entlang der Kugelumlaufspindel 46 verdreht der Schaltfinger 66 die Wähl- und Schaltwelle 68 um ihre Drehachse und führt damit eine Wählbewegung in der Schalteinrichtung durch. Der größere Elektromotor 34 treibt die Kugelumlaufspindel 52 an, die in zwei Lagern 70 und 72 gelagert ist. Auf der Kugelumlaufspindel 52 wird die Kugelmutter 74 bei Drehung des Elektromotors 34 axial verschoben. Dabei drückt die Kugelmutter 74 zunächst je nach Drehrichtung entweder die Tellerfedern im Federpaket 76 oder im Federpaket 78 zusammen, die beide je auf einer Seite der Kugelmutter 74 innerhalb des Schaltzylinders 50 vorgesehen sind. Die aktuelle Position des Schaltzylinders 50 wird über einen auf dem Schaltzylinder 50 montierten Magneten 80 auf den Positionssensor 48 übertragen. Der Schaltzylinder 50 ist über einen Zylinderstift 82 (Fig. 6) oder eine Schraube mit einem Ende eines Umlenkhebels 84 verbunden, der die Bewegung des Schaltzylinders 50 auf einen Schaltfinger 86 überträgt. Mit seinem Ende greift der Schalfinger an der Wähl- und Schaltwelle 68 an. Die axiale Bewegung der Kugelmutter 74 wird durch den Umlenkhebel 84 derart umgelenkt, dass die senkrecht zur Kugelumlaufspindel 52 angeordnete Wähl- und Schaltwelle 68 entlang ihrer Drehachse verschoben wird und dadurch eine Schaltbewegung in der Schalteinrichtung durchführt. Der Umlenkhebel 84 ist durch einen Spannstift 88 an einer Drehwelle 90 gegen ein relatives Verdrehen auf der Drehwelle 90 gesichert. Die Drehwelle 90 ist in einem Lager 92 (Fig. 6) im Getriebegehäuse 26 und in einem Lager 94 im Gehäuse 30 des Getriebestellers 24 gelagert. Damit kann die vorgesehene Lagerung der manuellen Schalteinrichtung im Getriebegehäuse 26 übernommen werden.

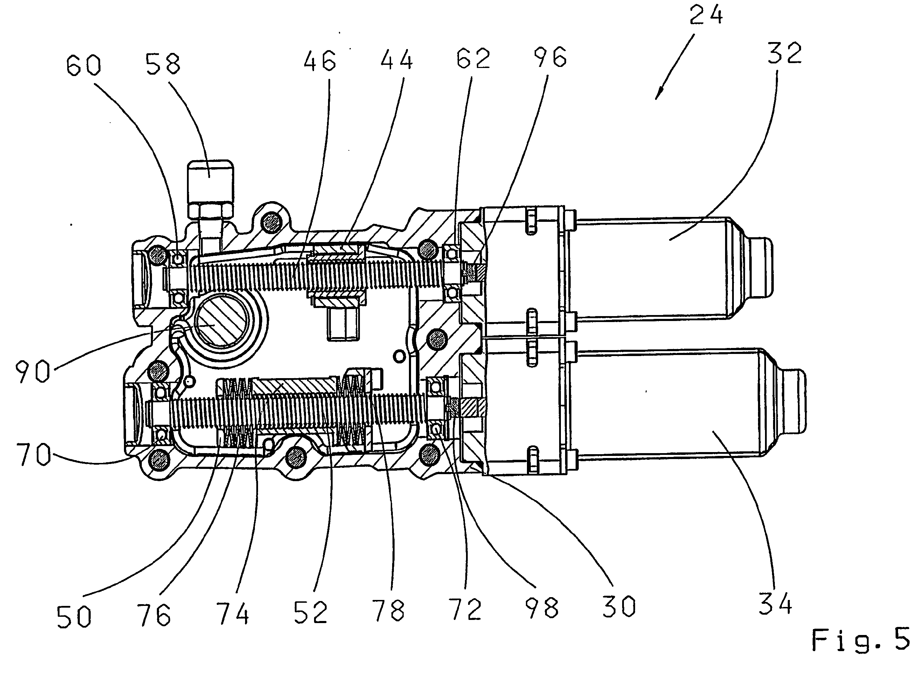

Die Fig. 5 zeigt den Getriebesteller 24 in einer teilgeschnittenen Ansicht, bei der von unten in den Getriebesteller 24 geschaut wird. Die unterschiedlich großen Elektromotoren 32 und 34 sind geschlossen in Draufsicht dargestellt, während der geschnittene Bereich der Kugelumlaufspindeln 46 und 52 geöffnet die Federpakete 76 und 78 auf beiden Seiten der Kugelmutter 74 auf der Kugelspindel 52 zeigen. Die Tellerfedern in den Federpaketen 76 und 78 nehmen die Bewegung der Kugelmutter 74 zunächst auf und, wenn die Situation in der Schaltung es zulässt, wird die Bewegung über den Schaltzylinder 50 auf die Schalteinrichtung übertragen. Die Drehbewegung der Elektromotoren 32 und 34 werden von den Drehachsen über Kreuzkupplungen 96 und 98 auf die Kugelumlaufspindeln 46 und 52 übertragen. Dadurch kann das Drehmoment zwischen den Bauteilen trotz eines eventuellen Achsversatzes zwischen der Drehwelle des Elektromotors und der Kugelumlaufspindel übertragen werden. Im Gehäuse 30 des Getriebestellers 24 ist der Entlüfter 58 angeordnet.

Die Fig. 6 zeigt den Getriebestelle 24 in einer teilgeschnittenen Seitenansicht, bei der ein Schnitt durch die Kugelumlaufspindel 52 gezeigt ist, die für die Schaltbewegung zuständig ist. Gleiche Bauteile wie in anderen Teilen der Zeichnung weisen die gleichen Bezugszeichen auf. Bei der Drehung der Kugelumlaufspindel 52 durch den Elektromotor 34 wird die Kugelmutter 74 in der Zeichnungsebene nach rechts bzw. links bewegt. Dabei werden zunächst die Federpakete 76 bzw. 78 zusammengedrückt und darüber der Schaltzylinder 50 bewegt. Die Kugelmutter 74 ist gegen eine Verdrehung relativ zum Schaltzylinder 50 während ihrer axialen Bewegung durch eine Schraube 100 oder einen Zylinderstift gesichert, die im Schaltzylinder 50 befestigt ist und deren Spitze 102 in einen axialen Schlitz 104 innerhalb der Kugelmutter 74 eingreift. Der Schlitz lässt eine axiale Bewegung der Kugelmutter 74 zu, behindert aber deren Verdrehung. In Fig. 6 ist deutlich die Lagerung der Drehwelle 90 in den Lagern 92 und 94 zu erkennen. Ebenso ist die Verbindung zwischen dem Schaltzylinder 50 und dem Umlenkhebel 84 erkennbar, die über den Zylinderstift 82 gewährleistet wird. Der Schaltfinger 66 ragt nach unten aus dem Getriebesteller 24 heraus, um mit der nicht gezeigten Wähl- und Schaltwelle in Verbindung zu treten. Der Schaltfinger 86 am Umlenkhebel 84 ragt noch weiter nach unten aus dem Getriebesteller heraus und greift an der Wähl- und Schaltwelle seitlich an. Zur Positionserkennung wirkt der Magnet 64 auf der Kugelmutter 44 mit dem Positionssensor 42 zusammen, während der Magnet 80 auf dem Schaltzylinder 50 mit dem Positionssensor 48 zusammenwirkt.

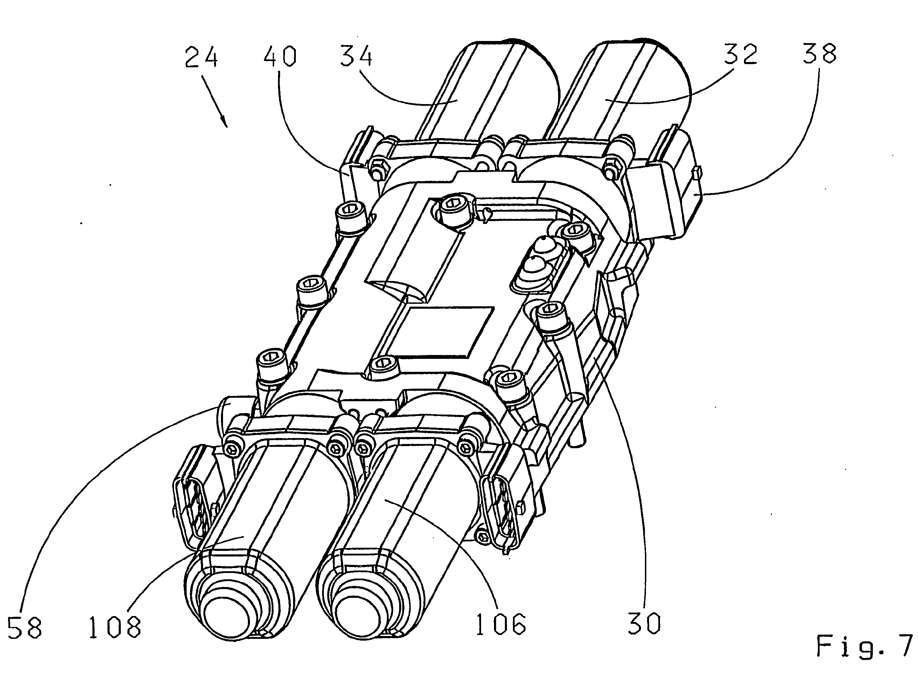

Die Fig. 7 zeigt eine Anordnung des Getriebestellers 24, bei dem an dem Gehäuse 30 neben den Motoren 32 und 34 zwei weitere Elektromotoren 106 und 108 angebracht sind. Das Gehäuse 30 ist grundsätzlich so gestaltet, dass an ihm entweder zwei nebeneinanderliegende Elektromotoren vorgesehen sind wie in Fig. 3 oder vier Elektromotoren wie in Fig. 7. Von den vier Elektromotoren 32, 34, 106, 108 greifen jeweils zwei Elektromotoren 32 und 106 bzw. 34 und 108 auf die gleiche Kugelumlaufspindel 46 bzw. 52 zu. Durch den Zugriff von jeweils zwei Elektromotoren können die Elektromotoren kleiner gestaltet werden bei gleicher Betätigungskraft oder es können bei der Verwendung der gleichen Elektromotoren die Betätigungskräfte für die Schaltelemente vergrößert werden. Dadurch lassen sich mit den gleichen Elementen aufgebaute Getriebesteller durch die Verwendung von vier Elektromotoren auch zur Schaltung von größeren Getrieben verwenden. Ebenso wie an den Elektromotoren 32 und 34 sind an den Elektromotoren 106 und 108 Steckverbindungen 110 und 112 vorgesehen zur Übertragung von Signalen und zur Stromversorgung.

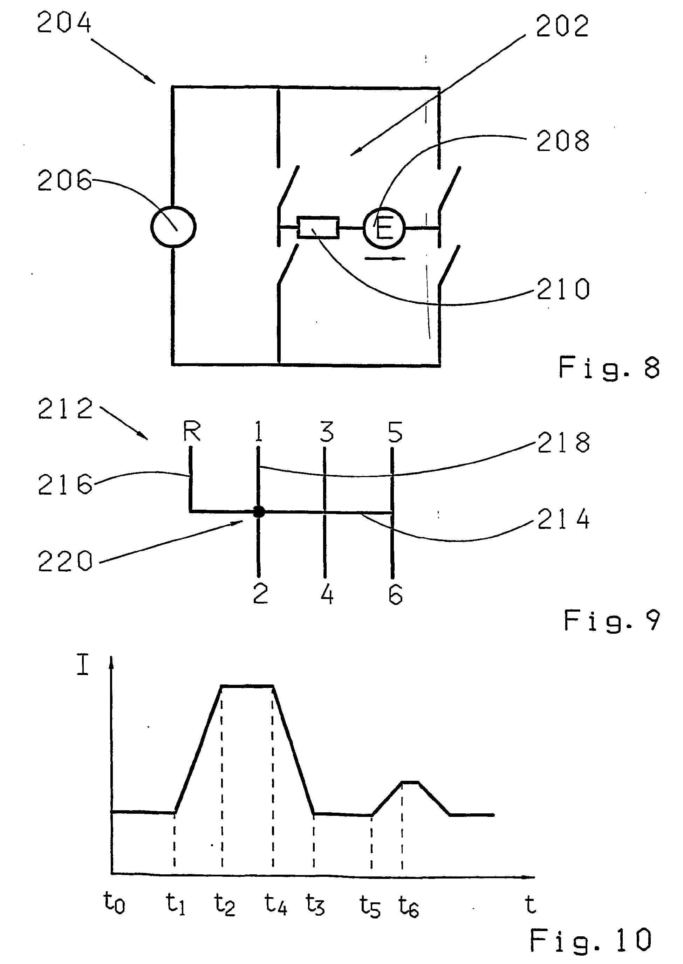

Die Fig. 8 zeigt eine H-Brücke 202 in einer Steuerung 204, eine Spannungsquelle 206, einen Elektromotor 208 und eine Strommessvorrichtung 210. Die Strommessvorrichtung 210 ermöglicht eine indirekte Messung des Momentes des Elektromotors 208.

Die Fig. 9 zeigt ein Schaltbild 212 für ein 6-GangSchaltgetriebe. In einer Wählgasse 214 ist zwischen einer Schaltgasse 216 für den Rückwärtsgang und einer Schaltgasse 218 für den ersten und zweiten Vorwärtsgang die Position 220 für einen Referenzschalter vorgesehen, der überstrichen werden kann bei Verlust der berechneten Absolutposition.

Die Fig. 10 zeigt einen typischen Verlauf des in der Strommessvorrichtung 210 gemessenen Stroms I über der Zeit t, wie er prinzipiell beim Einschalten eines beliebigen Gangs gemessen wird. In einer ersten Phase von t_0 bis t_1 liegt der Strom auf einem konstanten Niveau. In der Ansynchronisierphase von t_1 bis t_2 steigt der Strom beim Auftreffen der Schiebemuffe in der Schalteinrichtung auf zugehörige Elemente des zu schaltenden Zahnrads an, bis Synchronlauf der Bauteile erreicht ist. In der Phase von t_3 bis t_4 fällt der Strom beim Entsperren der Synchronisierung wieder ab, während die Schiebemuffe in Richtung der Position des Erreichens des zu schaltenden Gangs bewegt wird. Wird diese über Rastelemente fixierte Endposition der Schaltschiene bzw. Schaltwelle erreicht, steigt der Strom I im Elektromotor in der Phase von t_5 bis t_6 wieder an. Schaltet der Motor 208 beispielsweise durch Erreichen eines Referenzschalters ab, so verbleibt die Schaltschiene bzw. Schaltwelle in der über Rastelemente fixierten Endposition. Wird in einem Getriebesteller 24 der Schalteinrichtung ein mit einer Schaltelastizität 76, 78 versehenes Schaltelement 50 verwendet (Fig. 4), so wird die gespannte Schaltelastizität 76, 78 entspannt und schiebt dabei die nicht selbsthemmende Kugelumlaufspindel 52 zurück. Der Elektromotor 208, 34, 108 befindet sich damit in einer definierten Absolutposition und diese Absolutposition kann mit der berechneten Absolutposition verglichen werden. Die berechnete Absolutposition kann dann gegebenenfalls abgeglichen werden. Dieser Abgleich wird für jeden Gang bei jedem Schalten durchgeführt.

### Bezugszeichen

- 2: Fahrzeug
- 4: Antriebsmotor
- 6: Reibungskupplung
- 8: Getriebe
- 10: Abtriebswelle
- 12: Differenzial
- 14: Halbachse
- 16: Fahrzeugrad
- 18: Aktuator
- 20: Signalleitung
- 22: Steuerung
- 24: Getriebesteller
- 26: Gehäuse
- 28: Leitung
- 30: Gehäuse
- 32: Elektromotor'
- 34: Elektromotor
- 36: Abstützblech
- 38: Steckverbindung
- 40: Steckverbindung
- 42: Positionssensor
- 44: Kugelmutter
- 46: Kugelumlaufspindel
- 48: Positionssensor
- 50: Schaltzylinder
- 52: Kugelumlaufspindel
- 54: Steckverbindung
- 56: Steckverbindung
- 58: Entlüfter
- 60: Lager
- 62: Lager
- 64: Magnet
- 66: Schaltfinger
- 68: Wähl- und Schaltwelle
- 70: Lager
- 72: Lager
- 74: Kugelnutter
- 76: Federpaket
- 78: Federpaket
- 80: Magnet
- 82: Zylinderstift
- 84: Umlenkhebel
- 86: Schaltfinger
- 88: Spannstift
- 90: Drehwelle
- 92: Lager
- 94: Lager
- 96: Kreuzkupplung
- 98: Kreuzkupplung
- 100: Schraube
- 102: Spritze
- 104: Schlitz
- 106: Elektromotor
- 108: Elektromotor
- 110: Steckverbindung
- 112: Steckverbindung
- 202: H-Brücke
- 204: Steuerung
- 206: Spannungsquelle
- 208: Elektromotor
- 210: Strommessvorrichtung
- 212: Schaltbild
- 214: Wählgasse
- 216: Schaltgasse
- 218: Schaltgasse
- 220: Position

## Patentansprüche

1. Elektromechanischer Getriebesteller (24), der eine erste Antriebsvorrichtung zur Ausübung einer Wählbewegung einer Schalteinrichtung in einem Getriebegehäuse (26) eines Getriebes (8) eines Kraftfahrzeuges (2) mit einem ersten Elektromotor (32, 106), eine zweite Antriebsvorrichtung zur Ausübung einer Schaltbewegung der Schalteinrichtung mit einem zweiten Elektromotor (34, 108), der auf eine Spindel (52) einwirkt, und eine Steuerung (22, 204) zum Empfang von Sensorsignalen, zur Verarbeitung der Sensorsignale und zur Ausgabe von Steuerungssignalen an die Elektromotoren (32, 34, 106, 108, 208) umfasst, wobei die Drehachse der ersten Antriebsvorrichtung und die Drehachse der zweiten Antriebsvorrichtung parallel zueinander liegen und auf der Spindel (52) für die Schaltbewegung eine Mutter (74) vorgesehen ist, **dadurch gekennzeichnet, dass** die Mutter (74) in einem Schaltzylinder (50) zwischen zwei Federeinrichtungen (76, 78), die je ein Federpaket (76, 78) aus Tellerfedern umfassen und die in der Bewegungsrichtung der Spindel (52) wirken, angeordnet ist und deren Bewegung entlang der Spindel (52) den Schaltzylinder (50) in der Bewegungsrichtung der Spindel (52) bewegen.

2. Elektromechanischer Getriebesteller (24) nach Anspruch 1, **dadurch gekennzeichnet, dass** der Schaltzylinder (50) mit einem Umlenkhebel (84) und einem Schaltfinger (86) verbunden ist, der die Bewegung des Schaltzylinders (50) entlang der Spindel (52) in eine senkrecht dazu verlaufende Schaltbewegung der Schatteinrichtung übersetzt.

3. Elektromechanischer Getriebesteller (24) nach einem der Ansprüche 1 oder 2, **dadurch gekennzeichnet, dass** für die Wählbewegung und die Schaltbewegung je eine Spindel (46, 52) mit einer geringen Steigung vorgesehen ist, die jeweils direkt von wenigstens einem der Elektromotoren (32, 34, 106, 108) angetrieben wird.

4. Elektromechanischer Getriebesteller (24) nach einem der Ansprüche 1 oder 2, **dadurch gekennzeichnet, dass** für die Wählbewegung und die Schaltbewegung je eine Spindel (46, 52) mit einer großen Steigung vorgesehen ist, die jeweils über eine Übersetzung von wenigstens einem der Elektromotoren (32, 34, 106, 108) angetrieben wird.

5. Elektromechanischer Getriebesteller (24) nach einem der Ansprüche 1 bis 4, **dadurch gekennzeichnet, dass** zwischen der Welle des Elektromotors (32, 34, 106, 108) und der Spindel (46, 52) eine kraftschlüssige oder formschlüssige Kupplung (98) vorgesehen ist.

6. Elektromechanischer Getriebesteller (24) nach Anspruch 5, **dadurch gekennzeichnet, dass** zwischen der Welle des Elektromotors (32, 34, 106, 108) und der Spindel (46, 52) eine Kreuzkupplung (98) vorgesehen ist.

7. Elektromechanischer Getriebesteller (24) nach einem der Ansprüche 1 bis 6, **dadurch gekennzeichnet, dass** die Spindel (46, 52) die Drehwelle des Elektromotors (32, 34, 106, 108) ist.

8. Elektromechanischer Getriebesteller (24) nach einem der Ansprüche 1 bis 7, **dadurch gekennzeichnet, dass** die Spindel eine Kugelumlaufspindel (46, 52) ist.

9. Elektromechanischer Getriebesteller (24) nach einem der Ansprüche 1 bis 8, **dadurch gekennzeichnet, dass** die erste Antriebsvorrichtung und die zweite Antriebsvorrichtung nebeneinander auf einer gemeinsamen Seite des Gehäuses (30) des Getriebestellers (24) angeordnet sind.

10. Elektromechanischer Getriebesteller (24) nach einem der Ansprüche 1 bis 8, **dadurch gekennzeichnet, dass** die erste Antriebsvorrichtung und die zweite Antriebsvorrichtung auf zwei einander gegenüberliegenden Seiten des Gehäuses (30) des Getriebestellers (24) angeordnet sind.

11. Elektromechanischer Getriebesteller (24) nach Anspruch 10, **dadurch gekennzeichnet, dass** die erste Antriebsvorrichtung zwei Elektromotoren (32, 106) und die zweite Antriebsvorrichtung zwei Elektromotoren (34, 108) aufweist.

12. Elektromechanischer Getriebesteller (24) nach einem der Ansprüche 1 bis 11, **dadurch gekennzeichnet, dass** die Leistungsdimensionierung eines Elektromotors (32, 106) zur Ausübung der Wählbewegung kleiner vorgesehen ist als die Leistungsdimensionierung eines Elektromotors (34, 108) zur Ausübung der Schaltbewegung.

13. Elektromechanischer Getriebesteller (24) nach einem der Ansprüche 1 bis 12, **dadurch gekennzeichnet, dass** der Getriebesteller (24) ein Gehäuse (30) umfasst, das auf dem Getriebegehäuse (26) montierbar ist.

14. Elektromechanischer Getriebesteller (24) nach einem der Ansprüche 1 bis 12, **dadurch gekennzeichnet, dass** der Getriebesteller ein Gehäuse umfasst, das in dem Getriebegehäuse integrierbar ist.

15. Elektromechanischer Getriebesteller (24) nach einem der Ansprüche 1 bis 14, **dadurch gekennzeichnet, dass** in dem Getriebesteller (24) eine Entlüftungseinrichtung (58) vorgesehen ist, die gleichzeitig die Entlüftung des Gehäuses (30) des Getriebestellers (24) und des Gehäuses (26) des Getriebes (8) gewährleistet.

16. Elektromechanischer Getriebesteller (24) nach einem der Ansprüche 1 bis 15, **dadurch gekennzeichnet, dass** auf der Oberfläche des Gehäuses (30) des Getriebestellers (24) Positionssensoren (42, 48) vorgesehen ist, die je mit einem Magneten (64, 80) auf jeder der Spindeln (46, 52) zusammenwirken.

17. Elektromechanischer Getriebesteller (24) nach einem der Ansprüche 1 bis 16, **dadurch gekennzeichet**, **dass** die Schalteinrichtung Referenzschalter aufweist, die definierte Absolutpositionen bewegbarer Elemente (68) der Schalteinrichtung festlegen, dass der Elektromotor (208, 32, 34, 106, 108) einen Inkrementalgeber aufweist, der Inkremente für einen zurückgelegten Drehweg des Elektromotors (208, 32, 34, 106, 108) in einer Drehrichtung an die Steuerung (22, 204) weiterleitet, in der in einer H-Brücke (202) eine Strommessvorrichtung (210) vorgesehen ist, die den aufgenommenen Strom des Elektromotors (208, 32, 34, 106, 108) misst und in der aus dem gemessenen Stromverlauf eine berechnete Absolutposition des bewegbaren Elements (68) ermittelbar ist, die bei Erreichen der Referenzschalter mit der definierten Absolutposition abgleichbar ist.

18. Elektromechanischer Getriebesteller (24) nach Anspruch 17, **dadurch gekennzeichnet, dass** der Referenzschalter für den Elektromotor (208, 32, 106) für die Wählbewegung in einem Schaltbild (212) des Schaltgetriebes (8) im Bereich einer Wählgasse (214) zwischen einer Schaltgasse (216) für den Rückwärtsgang und einer ersten benachbarten Schaltgasse (218) für Vorwärtsgänge angeordnet ist.

19. Elektromechanischer Getriebesteller (24) nach Anspruch 17 oder 18, **dadurch gekennzeichnet, dass** die Referenzschalter für den Elektromotor (208, 34, 108) für die Schaltbewegung an mechanisch festgelegten Endpositionen des bewegbaren Elements (68) liegen, die einem vollständig eingelegten Gang entsprechen.

20. Getriebe (8) für ein Fahrzeug (2) mit einem Gehäuse (26) und einer darin angeordneten Schalteinrichtung und mit einem elektromechanischen Getriebesteller (24), der eine erste Antriebsvorrichtung zur Ausübung einer Wählbewegung einer Schalteinrichtung in einem Getriebegehäuse (26) eines Getriebes (8) eines Kraftfahrzeuges (2) mit einem ersten Elektromotor (32, 106), eine zweite Antriebsvorrichtung zur Ausübung einer Schaltbewegung der Schalteinrichtung mit einem zweiten Elektromotor (34, 108) und eine Steuerung (22, 204) zum Empfang von Sensorsignalen, zur Verarbeitung der Sensorsignale und zur Ausgabe von Steuerungssignalen an die Elektromotoren (32, 34, 106, 108, 208) umfasst, **gekennzeichnet durch** die Verwendung eines Getriebestellers (24) mit den Merkmalen der Ansprüche 1 bis 19.

21. Getriebe (8) nach Anspruch 20, **dadurch gekennzeichnet, dass** das Getriebe (8) ein nach einer Schaltlogik arbeitendes, automatisiertes Getriebe ist.

22. Getriebe (8) nach Anspruch 20 oder 21, **dadurch gekennzeichnet, dass** in der Schalteinrichtung eine kombinierte Wähl- und Schaltwelle (68) vorgesehen ist, auf die der Getriebesteller (24) durch Drehung der kombinierten Wähl- und Schaltwelle (68) als Wahlvorgang einwirkt und auf die der Getriebesteller (24) durch axiales Verschieben der kombinierten Wähl- und Schaltwelle (68) als Schaltvorgang einwirkt.

## Claims

1. The invention concerns an electromechanic transmission actuator (24) which comprises a first drive assembly for performing a selecting motion of a shifting element in the transmission housing (26) of the transmission (8) of a motor vehicle (2) with a first electric motor (32, 106), and which comprises a second drive assembly for performing a shifting motion of a shifting element with a second electric motor (34,108), which acts on a spindle (52); and which comprises a control (22, 204) for receiving control signals, for processing the sensor signals and for transmitting control signals to the electric motors (32, 34, 106, 108, 208), with the axis of rotation of the first drive assembly and the axis of rotation of the second drive assembly being arranged parallel to each other and a nut (74) being provided on the spindle (52) for the shifting motion, **characterized in that** the nut (74) is arranged within a shift cylinder (50) between two spring installations (76, 78), each of which comprises a spring pack (76, 78) made of disk springs which act in the direction of motion of the spindle (52) and whose motion along the spindle (52) move the shift cylinder (50) in the direction of motion of the spindle (52).

2. Electromechanic transmission actuator (24) according to claim 1, **characterized in that** the shift cylinder (50) is connected to a relay lever (84) and a shift finger (86), which translates the motion of the shift cylinder (50) along the spindle (52) into a vertical shifting motion of the shifting element.

3. Electromechanic transmission actuator (24) according to one of the claims 1 or 2, **characterized in that** one spindle (46, 52) each with a slight lead is provided for the selecting and the shifting motions, with each spindle being directly driven by at least one of the electric motors (32, 34, 106, 108).

4. Electromechanic transmission actuator (24) according to one of the claims 1 or 2, **characterized in that** one spindle (46, 52) each with a major lead is provided for the selecting and the shifting motions, with each spindle being driven via a ratio by at least one of the electric motors (32, 34, 106, 108).

5. Electromechanic transmission actuator (24) according to one of the claims 1 through 4, **characterized in that** a friction-type or positive clutch (98) is provided between the shaft of the electric motor (32, 34, 106, 108) and the spindle (46, 52).

6. Electromechanic transmission actuator (24) according to claim 5, **characterized in that** a cross coupling (98) is provided between the shaft of the electric motor (32, 34, 106, 108) and the spindle (46, 52).

7. Electtomechanic transmission actuator (24) according to one of the claims 1 through 6, **characterized in that** the spindle (46, 52) is the turning shaft of the electric motor (32, 34, 106, 108).

8. Electromechanic transmission actuator (24) according to one of the claims 1 through 7, **characterized in that** the spindle is a circulating ball spindle (46, 52).

9. Electromechanic transmission actuator (24) according to one of the claims 1 through 8, **characterized in that** the first drive assembly and the second drive assembly are arranged next to each other on the same side of the housing (30) of the transmission actuator (24).

10. Electromechanic transmission actuator (24) according to one of the claims 1 through 8, **characterized in that** the first drive assembly and the second drive assembly are arranged on two opposing sides of the housing (30) of the transmission actuator (24).

11. Electromechanic transmission actuator (24) according to claim 10, **characterized in that** the first drive assembly features two electric motors (32, 106) and the second drive assembly features two electric motors (34, 108).

12. Electromechanic transmission actuator (24) according to one of the claims 1 through 11, **characterized in that** dimensioning of the power of an electric motor (32, 106) for the performance of the selecting movement is lower than dimensioning of the power of an electric motor (34, 108) for the performance of the shifting movement.

13. Electromechanic transmission actuator (24) according to one of the claims 1 through 12, **characterized in that** the transmission actuator (24) comprises a housing (30) which can be mounted onto the transmission housing (26).

14. Electromechanic transmission actuator (24) according to one of the claims 1 through 12, **characterized in that** the transmission actuator comprises a housing which can be integrated within the transmission housing.

15. Electromechanic transmission actuator (24) according to one of the claims 1 through 14, **characterized in that** a ventilation installation (58) is provided in the transmission actuator (24) which simultaneously ensures venting of the housing (30) of the transmission actuator (24) and of the housing (26) of the transmission (8).

16. Electromechanic transmission actuator (24) according to one of the claims 1 through 15, **characterized in that** positions sensors (42, 48) are arranged on the surface of the housing (30) of the transmission actuator (24), each of which acts with a magnet (64, 80) on each of the spindles (46, 52).

17. Electromechanic transmission actuator (24) according to one of the claims 1 through 16, **characterized in that** the shifting element features reference controls which determine defined absolute positions of movable elements (68) of the shifting element, that the electric motor (208, 32, 34, 106, 108) features an incremental position transducer which transmits increments for a turning travel of the electric motor (208, 32, 34, 106, 108) to the control (22, 204), in which an H bridge (202) features an ampmeter (210) which measures the power of the electric motor (208, 32, 34, 106, 108), and in which on the basis of the power pattern measured a calculated absolute position of the movable element (68) can be determined which can be compared to the defined absolute position when the reference controls are reached.

18. Electromechanic transmission actuator (24) according to claim 17, **characterized in that** the reference control of the electric motor (208, 32, 106) for the selecting movement is arranged within a shifting pattern (212) of the manual transmission (8) in the area of a select gutter (214) between a shift gutter (216) for the reverse gear and a first adjacent shift gutter (218) for forward gears.

19. Electromechanic transmission actuator (24) according to claim 17 or 18, **characterized in that** the reference controls of the electric motor (208, 34, 108) for the shifting motion are positioned in mechanically determined end positions of the movable element (68), with these end positions corresponding to fully engaged gears.

20. A transmission (8) for a vehicle (2) with a housing (26) and a shifting element inside it, and with an electromechanic transmission actuator (24) which comprises a first drive assembly for performing a selecting motion of a shifting element in the transmission housing (26) of the transmission (8) of a motor vehicle (2) with a first electric motor (32, 106), and which comprises a second drive assembly for performing a shifting motion of a shifting element with a second electric motor (34, 108), and which comprises a control (22, 204) for receiving control signals, for processing the sensor signals and for transmitting control signals to the electric motors (32, 34, 106, 108, 208), **characterized by** the use of a transmission actuator (24) which comprises the features of claims 1 through 19.

21. A transmission (8) according to claim 20, **characterized in that** the transmission (8) is an automated transmission the operation of which is based on a control logic.

22. A transmission (8) according to claim 20 or 21, **characterized in that** the shifting element features a combined selector/gearshift shaft (68) onto which the transmission actuator (24) acts by rotating the combined selector/gearshift shaft (68) in the sense of a selecting process and onto which the transmission actuator (24) acts through axial displacement of the combined selector/gearshift shaft (68) in the sense of a shifting process.

## Revendications

1. Actionneur électromécanique (24) pour boîte de vitesses qui comprend un premier dispositif d'entraînement pour l'exécution d'un mouvement de sélection d'un dispositif de changement placé dans un carter (26) d'une boîte de vitesses (8) d'un véhicule automobile (2) comprenant un premier moteur électrique (32, 106), un deuxième dispositif d'entraînement destiné à exécuter un mouvement de changement du dispositif de changement comprenant un deuxième moteur électrique (34, 108) qui agit sur une vis (52), et une commande (22, 204) destinée à recevoir des signaux de capteurs, à traiter les signaux de capteurs et à envoyer des signaux de commande aux moteurs électriques (32, 34, 106, 108, 208), l'axe de rotation du premier dispositif d'entraînement et l'axe de rotation du deuxième dispositif d'entraînement étant parallèles entre eux et un écrou (74) étant prévu sur la vis (52) destinée au mouvement de changement, **caractérisé en ce que** l'écrou (74) est disposé dans un cylindre de changement (50) entre deux dispositifs à ressort (76, 78) qui comprennent chacun un paquet de ressorts (76, 78) formé de rondelles Belleville et qui agissent dans le sens du mouvement de la vis (52) et dont le mouvement le long de la vis (52) déplace le cylindre de changement (50) dans la direction du mouvement de la vis (52).

2. Actionneur de boîte de vitesses électromécanique (24) selon la revendication 1, **caractérisé en ce que** le cylindre de changement (50) est relié à un levier de renvoi (84) et à un doigt de changement (86) qui convertit le mouvement du cylindre de changement (50) le long de la vis (52) en un mouvement de changement du dispositif de changement s'étendant perpendiculairement au premier.

3. Actionneur de boîte de vitesses électromécanique (24) selon l'une des revendications 1 ou 2, **caractérisé en ce que**, pour le mouvement de sélection et pour le mouvement de changement, il est prévu à chaque fois une vis (46, 52) à petit pas qui est entraînée directement respectivement par au moins un des moteurs électriques (32, 34, 106, 108).

4. Actionneur de boîte de vitesses électromécanique (24) selon l'une des revendications 1 ou 2, **caractérisé en ce que**, pour le mouvement de sélection et pour le mouvement de changement, il est prévu à chaque fois une vis (46, 52) à grand pas qui est entraînée à chaque fois par l'intermédiaire d'une transmission par au moins un des moteurs électriques (32, 34, 106, 108).

5. Actionneur de boîte de vitesses électromécanique (24) selon l'une des revendications 1 à 4, **caractérisé en ce qu**'il est prévu entre l'arbre du moteur électrique (32, 34, 106, 108) et la vis (46, 52), un accouplement (98) opérant par action de force ou par sûreté de forme.

6. Actionneur de boîte de vitesses électromécanique (24) selon la revendication 5, **caractérisé en ce qu**'il est prévu un accouplement à action croisée (98) entre l'arbre du moteur électrique (32, 34, 106, 108) et la vis (46, 52).

7. Actionneur de boîte de vitesses électromécanique (24) selon l'une des revendications 1 à 6, **caractérisé en ce que** la vis (46, 52) est l'arbre rotatif du moteur électrique (32, 34, 106, 108).

8. Actionneur de boîte de vitesses électromécanique (24) selon l'une des revendications 1 à 7, **caractérisé en ce que** la vis est une vis à circulation de billes (46, 52).

9. Actionneur de boîte de vitesses électromécanique (24) selon l'une des revendications 1 à 8, **caractérisé en ce que** le premier dispositif d'entraînement et le deuxième dispositif d'entraînement sont disposés l'un à côté de l'autre sur un même côté du carter (30) de l'actionneur de boîte de vitesses (24).

10. Actionneur de boîte de vitesses électromécanique (24) selon l'une des revendications 1 à 8, **caractérisé en ce que** le premier dispositif d'entraînement et le deuxième dispositif d'entraînement sont disposés sur deux côtés mutuellement opposés du carter (30) de l'actionneur de boîte de vitesses (24).

11. Actionneur de boîte de vitesses électromécanique (24) selon la revendication 10, **caractérisé en ce que** le premier dispositif d'entraînement comporte deux moteurs électriques (32, 106) et le deuxième dispositif d'entraînement comporte deux moteurs électriques (34, 108).

12. Actionneur de boîte de vitesses électromécanique (24) selon l'une des revendications 1 à 11, **caractérisé en ce que** le dimensionnement de puissance d'un moteur électrique (32, 106) destiné à l'exécution du mouvement de sélection est prévu plus petit que le dimensionnement de puissance d'un moteur électrique (34, 108) destiné à l'exécution du mouvement de changement.

13. Actionneur de boîte de vitesses électromécanique (24) selon l'une des revendications 1 à 12, **caractérisé en ce que** l'actionneur de boîte de vitesses (24) comprend un carter (30) qui peut être monté sur le carter (26) de la boîte de vitesses.

14. Actionneur de boîte de vitesses électromécanique (24) selon l'une des revendications 1 à 12, **caractérisé en ce que** l'actionneur comprend un carter qui peut être intégré dans le carter de la boîte de vitesses.

15. Actionneur de boîte de vitesses électromécanique (24) selon l'une des revendications 1 à 14, **caractérisé en ce que**, dans l'actionneur de boîte de vitesses (24) est prévu un dispositif de ventilation (58) qui assure simultanément la ventilation du carter (30) de l'actionneur de boîte de vitesses (24) et du carter (26) de la boîte de vitesses (8).

16. Actionneur de boîte de vitesses électromécanique (24) selon l'une des revendications 1 à 15, **caractérisé en ce que**, sur la surface du carter (30) de l'actionneur de boîte de vitesses (24), sont prévus des détecteurs de position (42, 48) qui coopèrent chacun avec un électro-aimant (64, 80) prévu respectivement sur une des vis (46, 52).

17. Actionneur de boîte de vitesses électromécanique (24) selon l'une des revendications 1 à 16, **caractérisé en ce que** le dispositif de changement comporte des interrupteurs de référence qui fixent les positions absolues définies d'éléments mobiles (68) du dispositif de changement, **en ce que** le moteur électrique (208, 32, 34, 106, 108) comporte un capteur incrémental qui transmet des incréments pour un trajet de rotation parcouru du moteur électrique (208, 32, 34, 106, 108) dans un sens de rotation à la commande (22, 204) dans laquelle est prévue, dans un pont en H (202), un dispositif de mesure du courant (210) qui mesure le courant absorbé par le moteur électrique (208, 32, 34, 106, 108) et dans laquelle, à partir du profil du courant mesuré, peut être déterminée une position absolue calculée de l'élément mobile (68) qui peut être rendue égale à la position absolue définie lorsque l'interrupteur de référence est atteint.

18. Actionneur de boîte de vitesses électromécanique (24) selon la revendication 17, **caractérisé en ce que** l'interrupteur de référence pour le moteur électrique (208, 32, 106) destiné au mouvement de sélection est disposé dans un schéma de câblage (212) de la boîte de vitesses (8), dans la région d'une grille de sélection (214) entre une piste de changement (216) prévue pour la vitesse de marche arrière et une première piste de changement adjacente (218) prévue pour des vitesses de marche avant.

19. Actionneur de boîte de vitesses électromécanique (24) selon la revendication 17 ou 18, **caractérisé en ce que** les interrupteurs de référence pour le moteur électrique (208, 34, 108) destiné au mouvement de changement sont disposés dans des positions terminales fixées mécaniquement de l'élément mobile (68), qui correspondent à une vitesse entièrement engagée.

20. Boîte de vitesses (8) pour un véhicule (2) comprenant un carter (26) et un dispositif de changement disposé dans ce dernier et un actionneur de boîte de vitesses électromécanique (24) qui comprend un premier dispositif d'entraînement destiné à l'exécution d'un mouvement de sélection d'un dispositif de changement dans un carter (26) d'une boîte de vitesses (8) d'un véhicule automobile (2) comportant un premier moteur électrique (32, 106), un deuxième dispositif d'entraînement destiné à l'exécution d'un mouvement de changement du dispositif de changement comportant un deuxième moteur électrique (34, 108) et une commande (22, 204) destinée à recevoir des signaux de capteurs, à traiter les signaux de capteurs et à envoyer des signaux de commande aux moteurs électriques (32, 34, 106, 108, 208), **caractérisée par** l'utilisation d'un actionneur de boîte de vitesses (24) présentant les caractéristiques des revendications 1 à 19.

21. Boîte de vitesses (8) selon la revendication 20, **caractérisée en ce que** la boîte de vitesses (8) est une boîte de vitesses automatisée qui travaille conformément à une logique de changement.

22. Boîte de vitesses (8) selon la revendication 20 ou 21, **caractérisée en ce que**, dans le dispositif de changement, est prévu un arbre de sélection et de changement combiné (68) sur lequel l'actionneur de boîte de vitesses (24) agit par une rotation de l'arbre de sélection et de changement combiné (68) constituant une opération de sélection et sur lequel l'actionneur de boîte de vitesses (24) agit par une translation axiale de l'arbre de sélection et de changement combiné (68) constituant une opération de changement.
